# EUROPÄISCHE PATENTSCHRIFT

(11) **EP 3 919 997 B1**
(45) Veröffentlichungstag und Bekanntmachung des Hinweises auf die Patenterteilung: **13.11.2024**
(21) Anmeldenummer: 21176645.6
(22) Anmeldetag: 28.05.2021
(51) Int. Cl.: G05B 23/02

(54) **ZUSTANDSBESTIMMUNG FÜR EIN HAUSGERÄT**
STATUS DETERMINATION FOR A DOMESTIC APPLIANCE
DÉTERMINATION DE L'ÉTAT POUR UN APPAREIL ÉLECTROMÉNAGER

(30) Priorität: 05.06.2020 DE 102020207051; 02.10.2020 DE 102020212506
(43) Veröffentlichungstag der Anmeldung: 08.12.2021
(73) Patentinhaber: BSH Hausgeräte GmbH, 81739 München (DE)
(72) Erfinder: Kober, Christoph, 83624 Otterfing (DE); Söllner, Christoph, 81475 München (DE); Forst, Klaus-Martin, 89407 Dillingen (DE)

(56) Entgegenhaltungen:
- CN-A- 107 893 308
- DE-A1- 102011 083 103
- DE-U1- 202005 004 382
- JP-A- 2012 058 932
- US-A1- 2019 235 484

## Beschreibung

Die Erfindung betrifft die Bestimmung eines Zustands eines Hausgeräts. Insbesondere betrifft die Erfindung die Bestimmung einer graduellen Verwendungsfähigkeit eines Hausgeräts.

Ein Hausgerät umfasst mehrere Komponenten, die im Rahmen einer Benutzung des Hausgeräts jeweils einer Belastung ausgesetzt sind. Die Komponenten sind üblicherweise derart dimensioniert und beschaffen, dass sie eine vorbestimmte Betriebsdauer des Hausgeräts problemlos überdauern. Allerdings ist die Belastungsfähigkeit jeder Komponente nicht unbegrenzt, sodass das Hausgerät bei fortgesetzter Benutzung irgendwann einen Defekt aufweisen wird. Außerdem kann eine Komponente fehlerhaft sein oder über ihre Spezifikation hinaus belastet werden, sodass sie möglicherweise früher als andere Komponenten schadhaft wird. Einige Komponenten können als Verschleißteile ausgelegt sein, die in regelmäßigen Intervallen ausgetauscht werden sollten. Beispielsweise kann empfohlen sein, einen Wasserfilter in einer Kaffeemaschine nach Durchlauf eines bestimmten Volumens von Wasser zu ersetzen. Erfolgt dies nicht, so kann ein Folgeschaden entstehen, beispielsweise an einer Heizung für das Wasser.

DE 10 2011 083 103 A1 offenbart eine Dunstabzugshaube, bei der ein Maximalwert für die Verwendungsdauer eines Geruchsfilterelements ermittelt wird, um einen Austausch des Geruchsfilterelements zum richtigen Zeitpunkt zu gewährleisten.

Gemäß der JP 2012 058 932 A wird eine Nutzungsdaten-Historie eines im Einsatz befindlichen Geräts erfasst und daraus eine verbleibende Lebensdauer des Geräts berechnet. Wenn das Gerät einen Defekt aufweist, wird eine Datenbank mit gebrauchten Ersatzteilen durchsucht und das Gerät mit diesem gebrauchten Ersatzteil nur dann repariert, wenn das gebrauchte Ersatzteil eine höhere Restlebensdauer besitzt als die geschätzte verbleibende Lebensdauer des Geräts.

Die CN 107 893 308 B und US 2019 / 0235 484 A1 befassen sich jeweils mit der vorausschauenden Wartung eines Hausgeräts. Die DE 20 2005 004 382 U1 wiederum will mittels eines Sensors einen aktuellen Verschleißzustand eines Haushaltsgeräts bestimmen.

DE 10 2012 223 249 A1 schlägt vor, eine Warnung vor einem drohenden Ausfall eines Hausgeräts auf der Basis einer Abweichung von Geräteparametern von vorgespeicherten Geräteparametern bereitzustellen.

Ein Hausgerät kann auf viele verschiedene Weisen benutzt werden. Eingestellte Geräteparameter, verwendetes Verbrauchs- oder Verschleißmaterial oder Längen von Beanspruchungs- oder Bereithaltungszeiten können einen Einfluss darauf haben, wie zuverlässig oder wie lange das Hausgerät noch betrieben werden kann. Beispielsweise im Fall einer Veräußerung des Geräts kann ein Gesamtzustand des Geräts von Interesse sein. Auch wenn ein Defekt an einer Komponente auftritt, kann eine Entscheidung, ob das Hausgerät ersetzt oder repariert werden soll, von einem Gesamtzustand abhängig gemacht werden.

Eine der vorliegenden Erfindung zu Grunde liegende Aufgabe besteht in der Angabe einer verbesserten Technik zur Bestimmung einer Verwendungsfähigkeit eines Hausgeräts. Die Erfindung löst diese Aufgabe mittels des Gegenstands des unabhängigen Anspruchs. Unteransprüche geben bevorzugte Ausführungsformen wieder.

Nach einem ersten Aspekt der vorliegenden Erfindung umfasst ein Verfahren zum Bestimmen einer Verwendungsfähigkeit eines Hausgeräts Schritte des Abtastens von Betriebsinformationen des Hausgeräts; des Bestimmens von Belastungen verschiedener Komponenten des Hausgeräts auf der Basis der Betriebsinformationen; und des Bestimmens der Verwendungsfähigkeit des Hausgeräts auf der Basis der bestimmten Belastungen und vorbestimmter Belastungsfunktionen für die Komponenten; wobei eine Belastungsfunktion eine bestimmte Belastung einer Komponente auf deren verbleibende Belastungsfähigkeit abbildet.

Die Verwendungsfähigkeit betrifft bevorzugt ein funktionierendes Hausgerät. Erfindungsgemäß kann die Verwendungsfähigkeit ein Maß dafür angeben, wie lange oder wie intensiv das Hausgerät beziehungsweise eine Komponente des Hausgeräts voraussichtlich noch benutzt oder betrieben werden kann. Die Verwendungsfähigkeit kann einen Anschaffungs- oder Ersetzungspreis des Hausgeräts berücksichtigen und einen aktuellen Restwert des Geräts angeben. Zur Bestimmung der Verwendungsfähigkeit können beispielsweise eine betriebsbedingte Belastung, die insbesondere einen Verschleiß einer Komponente betrifft, und eine zeitbedingte Belastung, die eine Alterung einer Komponente betrifft, berücksichtigt werden. Eine Belastungsfunktion kann für eine Komponente oder das gesamte Hausgerät gelten. Mithilfe der Belastungsfunktionen können verschiedene Belastungsfähigkeiten des Hausgeräts vergleichbar gemacht werden, sodass die Verwendungsfähigkeit verbessert realistisch bestimmt werden kann.

Die Verwendungsfähigkeit kann einen Wert auf einer vorbestimmten eindimensionalen Skala umfassen. Die Skala kann vorbestimmte Grenzen aufweisen, von denen eine einen neuwertigen Zustand des Hausgeräts und ein anderer einen Zustand repräsentieren kann, in dem ein baldiger Ausfall wenigstens einer Komponente des Hausgeräts erwartet werden muss. Die Skala kann bezüglich einer vorbestimmten Größe wie einer Benutzungsdauer, einer Anzahl Benutzungen oder einem Restwert zwischen den Grenzen linear sein. In einer Ausführungsform erstreckt sich die Skala zwischen den Werten 1 und 10, wobei ein hoher Wert bevorzugt auf eine hohe verbleibende Verwendungsfähigkeit hinweist.

Die Ermittlung der Verwendungsfähigkeit kann aber auch für ein nicht mehr funktionsfähiges Hausgerät erfolgen. Dadurch kann ermittelt werden, welche Komponenten eine ausreichende Restlebensdauer besitzen, die eine Verwendung der jeweiligen Komponente als gebrauchtes Ersatzteil ermöglicht.

Gemäß dem Verfahren wird bestimmt, dass das Hausgerät eine vorbestimmte Verwendungsfähigkeit erfüllt, falls bestimmte Belastungsfähigkeiten der Komponenten vorbestimmte Schwellenwerte übersteigen. Der Verwendungsfähigkeit können mehrere Schwellenwerte zugeordnet sein, die jeweils eine Komponente oder das ganze Hausgerät betreffen können. Nur dann, wenn Belastungsfähigkeiten aller dieser Komponenten den ihnen jeweils zugeordneten Schwellenwert übersteigen, kann die vorbestimmte Verwendungsfähigkeit erfüllt sein. Das Erfüllen einer vorbestimmten Verwendungsfähigkeit wird dann durch ein Qualitätssiegel ausgedrückt, das dem Hausgerät verliehen wird. In einer Ausführungsform kann ein vorbestimmtes Garantieversprechen für das Hausgerät gegeben werden, falls es eine vorbestimmte Verwendungsfähigkeit erfüllt. So kann das Hausgerät beispielsweise als zertifiziertes Gebrauchtgerät einer weiteren Benutzung zugeführt werden. Ein vorzeitiges Entsorgen des Hausgeräts kann verhindert werden, und Ressourcen zur Herstellung des Hausgeräts können geschont werden.

In einer Ausführungsform sind mehrere Verwendungsfähigkeiten des Hausgeräts vorbestimmt; wobei für die vorbestimmten Verwendungsfähigkeiten jeweils Schwellenwerte für die Belastungsfähigkeiten der Komponenten des Hausgeräts vorbestimmt sind. Die vorbestimmten Verwendungsfähigkeiten können aufeinander aufbauen, indem ein Hausgerät, das eine höhere vorbestimmte Verwendungsfähigkeit erfüllt, auch alle Voraussetzungen zum Erfüllen einer niedrigeren Verwendungsfähigkeit erfüllt. Dazu können insbesondere die Schwellenwerte für die verbleibenden Belastungsfähigkeiten der Komponenten für die vorbestimmten Verwendungsfähigkeiten aufeinander aufbauen. Die vorbestimmten Verwendungsfähigkeiten können diskrete Punkte auf der oben genannten Skala darstellen.

Eine Komponente kann bestimmt werden, deren bestimmte Belastung die Erfüllung einer höheren Verwendungsfähigkeit durch das Hausgerät verhindert. Anders ausgedrückt kann bestimmt werden, welche Komponente bereits so stark belastet wurde, dass ihre verbleibende Belastungsfähigkeit die Einstufung des Hausgeräts in eine höhere vorbestimmte Verwendungsfähigkeit verhindert. Die Bestimmung ist insbesondere dann sinnvoll, wenn nur eine oder nur wenige Komponenten weniger belastungsfähig als die restlichen Komponenten sind. Ein Benutzer kann verbessert entscheiden, ob eine Servicemaßnahme an einer Komponente den Gesamtzustand des Hausgeräts verbessern kann. Dies kann beispielsweise beim Kaufen oder Verkaufen des gebrauchten Hausgeräts von Bedeutung sein.

Die Belastung einer Komponente kann eine zeitliche Verteilung von Benutzungen berücksichtigen. Insbesondere kann berücksichtigt werden, dass eine neu eingesetzte Komponente eher zu einem Ausfall neigen kann als eine, die bereits seit einer gewissen Zeit funktioniert. Dieser Effekt wird auch burn-in genannt. Wird die Komponente dann weiter benutzt, kann ihre Ausfallwahrscheinlichkeit wieder ansteigen. Ferner kann berücksichtigt werden, dass bestimmte Komponenten durch Nichtbenutzung belastet werden können. So kann beispielsweise eine Dichtung austrocknen, ein Lager kann Flugrost ansetzen oder Kunststoff kann porös werden. Wird eine Komponente über eine längere Zeit hinweg gleichmäßig benutzt, so kann dies zu einer geringeren Belastung führen als wenn sie gleich oft innerhalb einer kurzen Zeit benutzt wird. Außerdem können Kombinationen von Belastungen berücksichtigt werden. Ein Ventil kann durch Druck oder Temperatur belastet werden; eine Belastung durch Druck und Temperatur kann höher als die Summe der Einzelbelastungen sein.

Die Belastung einer Komponente kann unter Berücksichtigung einer durchgeführten Pflege- oder Servicemaßnahme bestimmt werden. Beispielsweise kann eine verbleibende Belastungsfähigkeit einer Komponente durch eine solche Maßnahme erhöht werden. Die Servicemaßnahme kann beispielsweise ein Reinigen, Schmieren, Entkalken, Nachstellen, Kontrollieren, Konservieren, Nachfüllen, Ergänzen oder Ersetzen von Betriebsstoffen oder Verbrauchsmitteln oder ein Austauschen eines Verschleißteils umfassen. Die Maßnahme kann durch einen Benutzer durchgeführt werden, beispielsweise indem er einen Maschinenreiniger anwendet, oder durch ein Servicepersonal, welches das Hausgerät bei Bedarf auch öffnen oder zerlegen kann.

Zwei äußerlich gleiche Hausgeräte können sich in den von ihnen umfassten Komponenten unterscheiden. Eine Belastungsfunktion ist bevorzugt einer im Hausgerät verbauten Komponente zugeordnet. Die Belastungsfunktion kann insbesondere berücksichtigen, aus welcher Charge oder Serie oder aus welchem Los die Komponente stammt, in welcher Ausführung die Komponente vorliegt oder wann und wie oft die Komponente bereits ausgetauscht oder gewartet wurde. Die Belastungsfunktion kann auch eine Komponente berücksichtigen, die individuell für das Hausgerät ausgewählt, angepasst oder kalibriert wurde.

Ein Schwellenwert für eine Komponente kann auf der Basis gesammelter Informationen über Belastungen und Ausfälle einer vergleichbaren Komponente in einer Vielzahl vergleichbarer Hausgeräte bestimmt werden. Insbesondere können Betriebs- und Verschlei-ßinformationen der Hausgeräte gesammelt und analysiert werden, um den Schwellenwert zu bestimmen. Ein Ausfall einer Komponente kann automatisch oder durch eine Person bestimmt werden. Eine Beurteilung, ob eine Komponente als verschlissen gelten muss, kann ebenfalls eine Person durchführen, insbesondere ein geschultes Servicepersonal. In einer Ausführungsform können Hausgeräte stichprobenartig auf Zustand beziehungsweise verbleibende Belastungsfähigkeit von umfassten Komponenten hin untersucht werden.

In ähnlicher Weise kann auch eine Belastungsfunktion für eine Komponente auf der Basis gesammelter Informationen über Belastungen und Ausfälle einer vergleichbaren Komponente in einer Vielzahl vergleichbarer Hausgeräte bestimmt werden.

In einer Ausführungsform wird die bestimmte Verwendungsfähigkeit am Hausgerät bereitgestellt, beispielsweise in Form einer permanenten oder abrufbaren Anzeige. Die Bestimmung der Verwendungsfähigkeit kann derart abgesichert sein, dass eine Beeinflussung eines angezeigten Werts erschwert ist. Dazu können insbesondere Methoden der Kryptographie verwendet werden, namentlich des kryptographischen Signierens einer Information. Die Bestimmung der Verwendungsfähigkeit kann im Hausgerät selbst oder durch eine externe Stelle erfolgen. Die externe Stelle kann permanent oder intermittierend mit dem Hausgerät verbunden sein. Die Informationen können in der externen Stelle oder im Hausgerät zwischengespeichert und bei Vorliegen einer Kommunikationsverbindung ausgetauscht werden.

Erfolgt die Bestimmung der Verwendungsfähigkeit durch die externe Stelle und / oder sind die Informationen dort zwischengespeichert, so können diese auch dann noch abgefragt werden, wenn das Hausgerät nicht angeschlossen oder nicht mehr funktionsfähig ist. Die externe Stelle kann vorzugsweise in Form einer Datenbank realisiert sein, welche beispielsweise über das Internet erreichbar ist.

Besondere Vorteile kann die vorliegende Erfindung im Zusammenhang von Recycling bzw. im Sinne einer Kreislaufwirtschaft besitzen. In einigen Staaten gibt es bereits eine gesetzliche Verpflichtung, Kunden im Falle einer Reparatur gebrauchte Ersatzteile anzubieten. Auf diese Weise sollen dem Markt noch funktionstüchtige gebrauchte Ersatzteile, die ansonsten möglicherweise einfach verschrottet worden wären, wieder zugeführt werden, um weniger Müll zu erzeugen und volkswirtschaftlich ressourcenschonender zu agieren. Dies soll vor allem dem Umweltschutz dienen.

Vor diesem Hintergrund kann es insbesondere für Hausgerätehersteller interessant sein, gebrauchte Hausgeräte entgeltlich oder auch unentgeltlich zurückzunehmen, in ihre Komponenten zu zerlegen und die Komponenten einzeln hinsichtlich ihrer (Wieder-) Verwendungsfähigkeit zu klassifizieren. Eine erste Klasse kann beispielsweise aus Komponenten bestehen, die in ihrer bestehenden Form verschlissen sind und daher nicht wiederverwendet werden können. Komponenten dieser Klasse sollten möglichst sortenrein zerlegt werden, um dann die in ihnen enthaltenen Materialien zurückzugewinnen. Beispielsweise kommt ein Einschmelzen und Wiederverwenden von Stahl in Betracht. Eine zweite Klasse kann aus Komponenten bestehen, die nach einer Aufarbeitung wiederverwendbar sind. Zu denken ist beispielsweise an gewisse Filter, die gründlich gereinigt werden müssen. Eine dritte Klasse kann aus Komponenten bestehen, die ohne weiteres noch wiederverwendet werden können, da sie eine hohe Lebensdauer besitzen, wie z.B. Waschtrommeln.

Um entscheiden zu können, welche Komponenten welcher Klasse zugeordnet werden sollten, können verschiedene Parameter einbezogen werden. Interessant kann beispielsweise das Fertigungsdatum des Hausgeräts sein. Wenn das Fertigungsdatum schon sehr lange zurückliegt, ist es eher unwahrscheinlich, dass gewisse Komponenten wiederverwendbar sind. Darüber hinaus gibt es in vielen Ländern eine gesetzliche Verpflichtung, auch nach Produktionsende eines Hausgerätemodells noch für eine gewisse Anzahl von Jahren Ersatzteile bereitzuhalten. Wenn das entsprechende Hausgerät zu einem Hausgerätemodell gehört, für das keine Ersatzteile mehr vorgehalten werden müssen, kann es sein, dass eine Wiederverwendung wirtschaftlich unattraktiv ist. Manchmal ist man wiederum jedoch froh, auch noch für sehr alte Liebhaber-Modelle entsprechende Ersatzteile zu erhalten. Das Alter einer Komponente allein ist jedoch häufig nicht ausschlaggebend für dessen Wiederverwendbarkeit. Wie bereits oben dargestellt wurde, kann es deswegen attraktiv sein zu wissen, wie viele Betriebsstunden die Komponenten gelaufen sind und wie häufig sie gewartet wurde, wie häufig bspw. die oben genannten Pflege- oder Servicemaßnahmen durchgeführt wurden.

Im Sinne der oben angesprochenen Kreislaufwirtschaft kann es natürlich auch vorkommen, dass ein Hausgerätehersteller relativ neuwertige Hausgeräte zurückerhält, bei denen nur einige wenige Komponenten ausgetauscht oder überarbeitet werden müssen, bevor das Hausgerät als gebrauchtes (und überarbeitetes) Hausgerät angeboten werden kann. Dies kann z.B. im Zusammenhang mit dem Verleasen von Hausgeräten passieren.

Nach einem weiteren, nicht beanspruchten Aspekt der vorliegenden Offenbarung umfasst eine Vorrichtung zur Bestimmung einer Verwendungsfähigkeit eines Hausgeräts und/oder einer Verwendungsfähigkeit von Komponenten des Hausgeräts eine Abtasteinrichtung zur Abtastung von Betriebsinformationen des Hausgeräts; und eine Verarbeitungseinrichtung. Dabei ist die Verarbeitungseinrichtung dazu eingerichtet, Belastungen verschiedener Komponenten des Hausgeräts auf der Basis der Betriebsinformationen zu bestimmen; und eine Verwendungsfähigkeit des Hausgeräts und/oder einer Verwendungsfähigkeit von Komponenten des Hausgeräts auf der Basis der bestimmten Belastungen und vorbestimmter Belastungsfunktionen für die Komponenten zu bestimmen. Dabei bildet eine Belastungsfunktion eine bestimmte Belastung einer Komponente auf deren verbleibende Belastungsfähigkeit ab.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nach noch einem weiteren, nicht beanspruchten Aspekt der vorliegenden Offenbarung umfasst ein Hausgerät eine hierin beschriebene Vorrichtung. Die Vorrichtung kann zur Steuerung des Hausgeräts eingerichtet oder mit einer dazu eingerichteten Steuerung kommunikativ verbunden sein.

Ein weiteres Verfahren umfasst Schritte des Erfassens von Betriebsinformationen einer Vielzahl Hausgeräte, wobei die Hausgeräte jeweils mehrere vorbestimmte Komponenten umfassen; des Erfassens von Bewertungen einer verbleibenden Belastungsfähigkeit von Komponenten der Hausgeräte; und des Bereitstellens einer Belastungsfunktion, die eine verbleibenden Belastungsfähigkeit einer Komponente bezüglich einer zuvor erfolgten Belastung der Komponente bestimmt.

In entsprechender Weise kann auch ein Schwellenwert für eine verbleibende Belastungsfähigkeit bestimmt werden, wobei der Schwellenwert einer vorbestimmten Verwendungsfähigkeit des Hausgeräts zugeordnet ist. Bevorzugt werden Belastungsfunktionen und/oder Schwellenwerte für mehrere Komponenten des Hausgeräts gleichzeitig bestimmt.

Die Erfindung wird nun unter Bezug auf die beiliegenden Figuren genauer beschrieben, in denen:
- Figur 1: ein System mit einem Hausgerät;
- Figur 2: ein Ablaufdiagramm eines ersten Verfahrens;
- Figur 3: ein Ablaufdiagramm eines zweiten Verfahrens;
- Figur 4: beispielhafte Belastungsverläufe; und
- Figur 5: beispielhafte vorbestimmte verbleibende Verwendungsfähigkeiten für ein Hausgerät
darstellt.

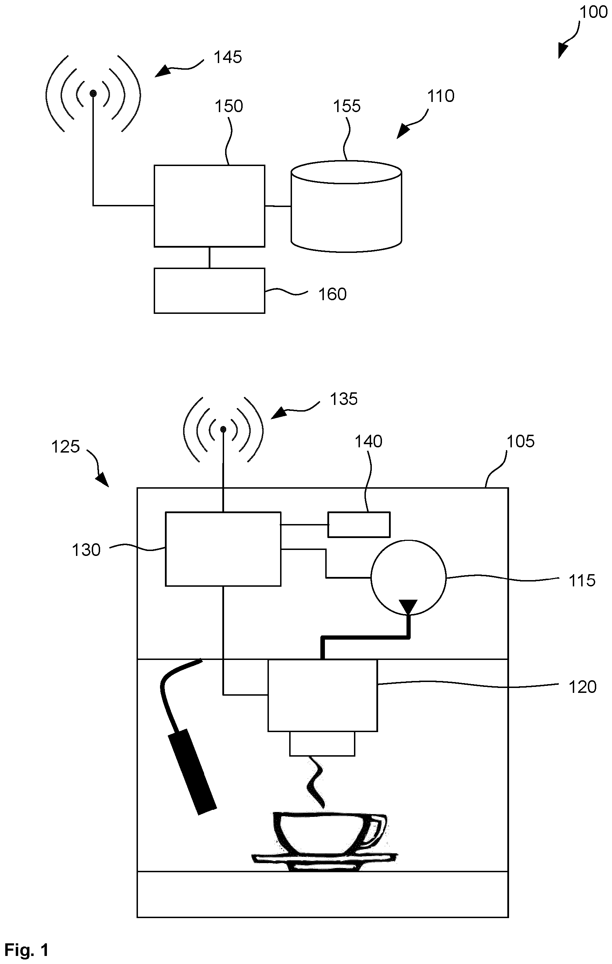

Figur 1 zeigt ein System 100 mit einem Hausgerät 105 und einer optionalen externen Stelle 110. Das Hausgerät 105 ist bevorzugt zum Betrieb in einem Haushalt oder Büro eingerichtet, insbesondere in einer Küche, und kann beispielsweise einen Geschirrspüler, eine Dunstabzugshaube, einen Herd, einen Ofen, einen Mixer, einen Toaster, ein Rührgerät, aber auch einen Staubsauger oder einen Fensterreiniger umfassen. Das Hausgerät 105 kann dazu eingerichtet sein, zur Bearbeitung einer vorbestimmten Aufgabe selbsttätig im Haushalt mobil zu sein. In der dargestellten, beispielhaften Ausführungsform ist das Hausgerät als Kaffeemaschine ausgebildet.

Das Hausgerät 105 umfasst üblicherweise eine Vielzahl Komponenten, wobei vorliegend nur eine als Flüssigkeitspumpe ausgebildete erste Komponente 115 und eine als Brühgruppe ausgebildete zweite Komponente 120 dargestellt sind. Mehrere Komponenten 115, 120 können in einer Baugruppe zusammengefasst sein, die ebenfalls als Komponente 115, 120 betrachtet werden kann. In diesem Sinn kann auch das gesamte Hausgerät 105 als Komponente 115, 120 angesehen werden.

Ferner umfasst das Hausgerät 105 eine Steuervorrichtung 125, die dazu eingerichtet ist, Informationen über die Komponenten 115, 120 zu verarbeiten. Dazu umfasst die Steuervorrichtung 125 bevorzugt eine Verarbeitungseinrichtung 130. Die Steuervorrichtung 125 kann mit zumindest einigen der Komponenten 115, 120 verbunden sein oder mit einer nicht dargestellten Steuervorrichtung, die dazu eingerichtet ist, eine Funktion des Hausgeräts durch Steuerung zumindest einiger der Komponenten 115, 120 zu steuern. Alternativ kann auch ein Sensor zur Bestimmung einer Betriebsinformation vorgesehen sein. Die Steuervorrichtung 125 umfasst bevorzugt eine Kommunikationseinrichtung 135, die wie dargestellt drahtlos oder auch drahtgebunden arbeiten kann, sowie weiter bevorzugt eine Ausgabeeinrichtung 140. Die Ausgabeeinrichtung 140 ist vorliegend beispielhaft als optische Anzeige ausgebildet, die auch beispielsweise zur Darstellung eines Zustands oder eines Bedienelements des Hausgeräts 105 verwendet werden kann. Andere Ausgabeeinrichtungen 140, beispielsweise zur akustischen oder haptischen Ausgabe, sind ebenfalls möglich.

Die Steuervorrichtung 125 ist dazu eingerichtet, Belastungen der Komponenten 115, 120 zu bestimmen und mittels vorbestimmte, zugeordneter Belastungsfunktionen jeweils eine verbleibende Belastungsfähigkeit der Komponenten 115, 120 zu bestimmen. Aus diesen kann dann eine verbleibende Verwendungsfähigkeit des Hausgeräts 105 bestimmt und beispielsweise mittels der Ausgabeeinrichtung 140 am Hausgerät 105 bereitgestellt werden. Mit diesen Bestimmungen verbundene Verarbeitungsschritte können seitens der lokalen Verarbeitungseinrichtung 130 oder seitens der externen Stelle 110 durchgeführt werden. Ist eine Kommunikation zwischen der Steuervorrichtung 125 und der externen Stelle 110 nicht durchgehend möglich, so können Informationen zwischengespeichert werden, um zu einem anderen Zeitpunkt übermittelt zu werden. In noch einer weiteren Ausführungsform können die Informationen durch ein mobiles Gerät aufgenommen und an die externe Stelle 110 weitergeleitet werden. Das mobile Gerät kann beispielsweise ein Servicegerät sein, das ein Servicetechniker beispielsweise bei einer Wartung oder Analyse des Hausgeräts 105 mit diesem verbinden kann. In einer weiteren Ausführungsform ist das Gerät nicht mobil und kann beispielsweise in einer Werkstatt vorgesehen sein, in der das Hausgerät 105 gewartet werden kann. Das Gerät kann mit der externen Stelle 110 kommunizieren oder mit diesem integriert ausgeführt sein.

Die externe Stelle 110 umfasst bevorzugt eine Kommunikationseinrichtung 145 und eine Verarbeitungseinrichtung 150. Außerdem können eine Speichereinrichtung 155 oder eine Eingabeeinrichtung 160 vorgesehen sein. Die externe Stelle 110 ist bevorzugt dazu eingerichtet, Informationen einer Vielzahl Hausgeräte 105 zu empfangen und zu verarbeiten. Insbesondere kann die Stelle 110 Informationen über beobachtete Belastungen von Komponenten 115, 120 der Hausgeräte 105 empfangen. Außerdem können Informationen über einen Zustand oder Ausfall einer Komponente 115, 120 bestimmt werden. Diese Informationen können durch die Steuereinrichtungen 125 der Hausgeräte oder durch Eingabe mittels der Eingabevorrichtung 160 bestimmt werden. Die Eingabevorrichtung 160 kann beispielsweise durch einen Benutzer des Hausgeräts 105 oder durch eine Serviceperson benutzt werden. In einer Ausführungsform ist die Eingabevorrichtung 160 als Dienst ausgebildet, der nach Art eines Servers oder einer Cloud über ein Kommunikationsnetz, insbesondere das Internet oder ein Mobilfunknetz, benutzt werden kann.

Die Stelle 110 kann auf der Basis von empfangenen Belastungs- und Zustands- oder Ausfallinformationen von vergleichbaren Komponenten 115, 120 von Hausgeräten 105 einen Zusammenhang zwischen der Belastung und einer verbleibenden Belastungsfähigkeit bestimmen. Wird eine Komponente 115, 120 über die Grenzen der bestimmten Belastungsfähigkeit hinaus belastet, so ist ihr Ausfall wahrscheinlich. Die verbleibende Belastungsfähigkeit kann in verschiedenen Einheiten angegeben werden, beispielsweise in Betriebsstunden, Betätigungen oder einer verrichteten Arbeit. Die Arbeit kann im Fall eines Motors beispielsweise eine Anzahl Umdrehungen oder im Fall einer Pumpe ein gefördertes Volumen betreffen. Die verbleibende Belastungsfähigkeit kann als Bruchteil einer ursprünglichen Belastungsfähigkeit der Komponente 115, 120 angegeben werden.

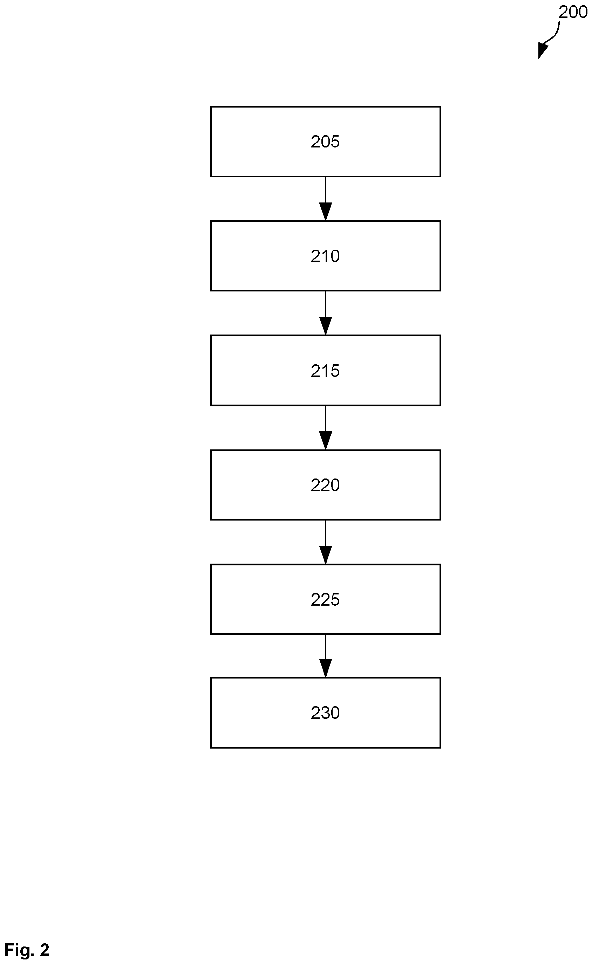

Figur 2 zeigt ein Ablaufdiagramm eines ersten Verfahrens 200, das mittels des Systems 100 ausgeführt werden kann. Das Verfahren 200 kann insbesondere auf der Steuervorrichtung 125 und/oder auf der externen Stelle 110 ausgeführt werden. In einer Ausführungsform erfolgt eine verteilte Ausführung.

In einem Schritt 205 werden Betriebsinformationen des Hausgeräts 105 bestimmt. Diese können insbesondere eine ausgeführte Funktion, einen eingenommenen Zustand, eine Anforderung oder ein bereitgestelltes Ergebnis des Hausgeräts 105 umfassen.

Weitere beispielhafte Betriebsinformationen umfassen ein Alter des gesamten Hausgeräts 105, insbesondere seit seiner ersten Inbetriebnahme oder seiner Fertigung; ein Alter einer Komponente 115, 120 unabhängig davon; eine Anzahl Betriebsstunden des Hausgeräts 105, wobei unterschiedliche Betriebsmodi wie Betrieb, Standby und Aus unterschieden werden können; eine Stromstärke durch eine Komponente 115, 120, beispielsweise durch einen Motor, einen Fotowiderstand oder eine Fotodiode; eine Luftfeuchte; einen Wasserstand; einen Füllstand eines Verbrauchsmaterials; Vibrationen und ihre Frequenzen; eine Antwortzeiten einer vorbestimmten elektronischen Komponente 115, 120; eine Anzahl von Öffnungen einer Gerätetür des Hausgeräts 105; oder eine gemeldete Fehlernachrichten oder ein Fehlercode.

Weitere Betriebsinformationen können gesammelt oder indirekt bestimmt werden. Beispielsweise kann eine Laufzeit einer Komponente 115, 120 bestimmt werden; ein Betriebsstundenzähler des Hausgeräts 105 kann ausgelesen werden; ein Ausfall oder eine Fehlfunktion können erfasst werden. Aus bestehenden Informationen kann auch ein Fehler abgeleitet werden. Beispielsweise kann bestimmt werden, dass ein Bedienelement nicht funktioniert, wenn wiederholte Nutzerinteraktionen für die gleiche technische Funktion erfasst werden. Außerdem können Informationen durch eine Person bereitgestellt werden, beispielsweise im Rahmen eines Kundendiensteinsatzes.

Funktionen einzelner Komponenten 115, 120 des Hausgeräts 105 können in einem Schritt 210 aus diesen Informationen abgeleitet oder direkt bestimmt werden. Den Betriebs- oder Funktionsinformationen können jeweils Zeitpunkte oder Zeitdauern zugeordnet sein. Insbesondere die Funktionsinformationen können umfangreich sein, beispielsweise wenn ein zeitlicher Verlauf einer Steuerung eines Motors, eines Ventils oder einer Pumpe erfasst wird. Zur Erfüllung einer vorbestimmten Funktion des Hausgeräts 105, im Beispiel von Figur 1 zur Zubereitung von Kaffee durch die Kaffeemaschine 105, kann ein komplexes Zusammenspiel der Komponenten 110, 115 gesteuert werden, wobei Funktionsinformationen anfallen können. Es ist bevorzugt, dass nur bestimmte Funktionsinformationen aufgezeichnet und die anderen verworfen werden. Auf der Basis dieser Informationen kann dann eine erfolgte Belastung einer Komponente 115, 120 bestimmt werden.

In einem Schritt 215 kann eine Historie einer Komponente 115, 120 bestimmt werden. Beispielsweise kann bestimmt werden, ob es sich um eine original verbaute Komponente 115, 120 handelt, ob oder wann diese gewartet oder ausgetauscht wurde, in welcher Ausführung sie vorliegt, oder welche zurückliegenden Belastungen bekannt sind. Mittels einer vorbestimmten Belastungsfunktion kann in einem Schritt 220 eine verbleibende Belastungsfähigkeit der Komponente 115, 120 bestimmt werden. Dabei kann eine projektierte oder empirisch bestimmte maximale Belastungsfähigkeit der Komponente 115, 120 zu Grunde gelegt werden. Die Belastungsfähigkeit kann den Wert null erreichen, wenn eine Funktion der Komponente 115, 120 nicht mehr mit einer vorbestimmten Qualität erbracht werden kann. Die Qualität kann beispielsweise eine Leistung oder eine Fehlerrate umfassen. Beispielsweise kann ein Taster als nicht mehr belastungsfähig bestimmt werden, wenn er 10 von 1000 Betätigungen falsch erfasst.

Bei dieser Bestimmung können individuelle Merkmale einer betrachteten Komponente 115, 120 berücksichtigt werden. Diese Merkmale können insbesondere im Rahmen einer Herstellung oder Wartung einer Komponente 115, 120 bestimmt werden. In einer Ausführungsform sind Herstellungsinformationen des Hausgeräts 105 auf der Basis einer Identifikation des Hausgeräts 105 aus einer Datenbank bestimmbar, die insbesondere an der externen Stelle 110 verfügbar sein kann.

Solche Merkmale können beispielsweise Metainformationen einer Komponente 115, 120 wie ein Herstellungsdatum oder eine Bauserie; eine erwartete Lebensdauer einer Komponente 115, 120, beispielsweise in Form einer Anzahl von möglichen Betätigungen eines Tasters oder einer Mean-Time-To-Failure (MTTF) für eine elektronische Komponente 115, 120 umfassen. Weitere Informationen können eine Resistenz einer Komponente 115, 120 gegen Umwelteinflüsse, etwa Vibration oder Temperaturschwankungen betreffen, insbesondere wenn die Komponente 115, 120 eine elektrische oder mechanische Verbindung innerhalb des Hausgeräts 105 aufweist. Auch ein Kalibrierparameter, der im Rahmen der Herstellung festgelegt wurde, kann berücksichtigt werden. Weiter kann ein Parameter berücksichtigt werden, der bei einer Endabnahme des hergestellten Hausgeräts 105 oder einer seiner Komponenten 115, 120 bestimmt wurde.

In einem Schritt 220 kann eine verbleibende Verwendungsfähigkeit des Hausgeräts 105 auf der Basis der verbleibenden Belastungsfähigkeiten von vorbestimmten, umfassten Komponenten 115, 120 bestimmt werden. Eine vorbestimmte Verwendungsfähigkeit kann das Hausgerät 105 nur erfüllen, wenn die verbleibenden Belastungsfähigkeiten aller vorbestimmten Komponenten 115, 120 jeweils zugeordnete Schwellenwerte übersteigen. Die Verwendungsfähigkeit kann auf einer vorbestimmten Skala ausgedrückt werden. In einem Schritt 230 kann die bestimmte Verwendungsfähigkeit bereitgestellt werden, beispielsweise auf der Ausgabevorrichtung 140 des Hausgeräts 105 oder an der externen Stelle 110.

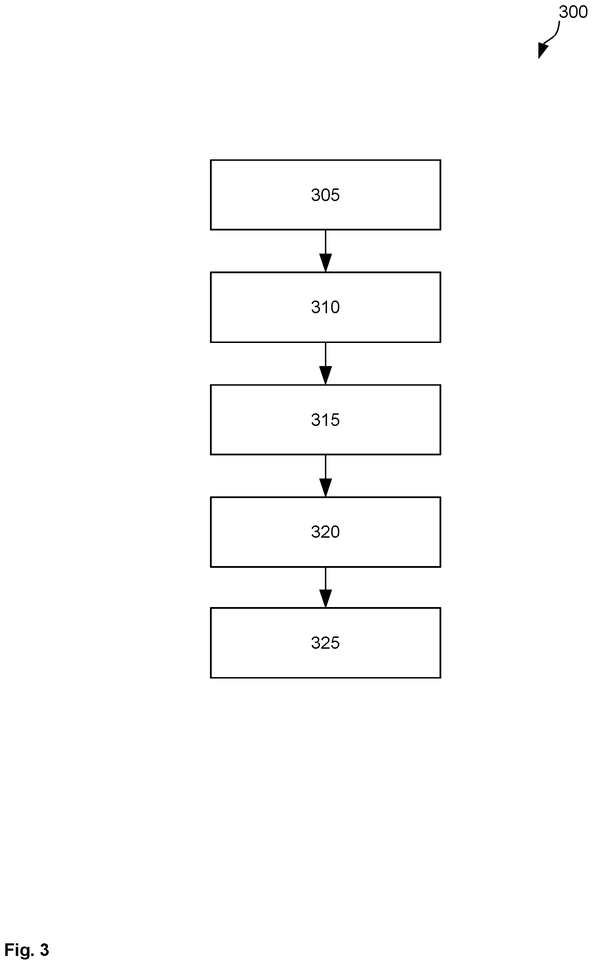

Figur 3 zeigt ein Ablaufdiagramm eines zweiten Verfahrens 300, das in Verbindung mit dem System 100 und insbesondere seitens der externen Stelle 110 ausgeführt werden kann. Ziel des Verfahrens 300 ist, aus Erfahrungen mit dem Betrieb einer Vielzahl Hausgeräte 105 Beurteilungsmaßstäbe zu deren Bewertung abzuleiten. Insbesondere soll es ermöglicht werden, auf der Basis einer bestimmten Belastung einer Komponente 115, 120 eines Hausgeräts eine verbleibende Belastungsfähigkeit der Komponente 115, 120 zu bestimmen. Ferner sollen Schwellenwerte für die verbleibenden Belastungsfähigkeiten der Komponenten 115, 120 eines Hausgeräts 105 bestimmt werden, die überschritten werden müssen, um dem Hausgerät 105 eine vorbestimmte Verwendungsfähigkeit zu attestieren. Dazu sollen die Schwellenwerte der Komponenten 115, 120 möglichst aufeinander abgestimmt werden.

In einem Schritt 305 können Betriebsinformationen eines Hausgeräts 105 empfangen werden. Diese Informationen können insbesondere Bestimmungen des Schritts 205 des Verfahrens 200 an dem Hausgerät 105 umfassen. In einem Schritt 310 kann eine Belastung einer vom Hausgerät 105 umfassten Komponente 115, 120 bestimmt werden. Dieser Schritt kann auch als Schritt 210 seitens des Hausgeräts 105 ausgeführt werden, wobei ein Bestimmungsergebnis an die externe Stelle 110 übermittelt wird. Die Schritte 305 und 310 werden üblicherweise sehr häufig durchgeführt. Dabei anfallende Informationen können abgespeichert werden.

In einem Schritt 315 kann eine Bewertung einer Komponente 115, 120 bestimmt werden. Die Bewertung kann automatisch bestimmt werden und beispielsweise einen Ausfall, eine Leistung oder eine Fehlerrate der Komponente 115, 120 betreffen. Die Bewertung kann auch in Form einer Eingabe erfasst werden, die eine Person tätigen kann, die das Hausgerät 105 beziehungsweise eine seiner Komponenten 115, 120 bewertet.

In einem Schritt 320 kann auf der Basis bestimmter Informationen über vergleichbare Komponenten 115, 120 eine Belastungsfunktion für diese Komponente 115, 120 bestimmt werden. Insbesondere kann mit statistischen Mitteln oder mittels maschinellen Lernens bestimmt werden, welche Belastung die Komponente 115, 120 üblicherweise aushält, bevor sie als defekt oder nicht mehr ausreichend leistungsfähig eingestuft wird. Dabei können unterschiedliche Belastungen berücksichtigt werden, die beispielsweise eine Lebensdauer im Hausgerät 105 und eine Anzahl Betätigungen umfassen kann. Ein Zusammenhang zwischen einer Belastung und einer verbleibenden Belastungsfähigkeit kann in Form einer Belastungsfunktion bereitgestellt werden.

In einem Schritt 325 können Belastungsfunktionen für Komponenten 115, 120 eines Hausgeräts 105 aneinander angeglichen oder miteinander harmonisiert werden, um die Bestimmung einer verbleibenden Verwendungsfähigkeit des Hausgeräts 105 zu erlauben. Dabei werden Schwellenwerte für die einzelnen verbleibenden Belastungsfähigkeiten bestimmt, die zu einer vorbestimmten Verwendungsfähigkeit korrespondieren. Wird ein Hausgerät 105, dessen Komponenten 115, 120 die Schwellenwerte erreichen, weiterverwendet, so sollten die verbleibenden Belastungsfähigkeiten der Komponenten 115, 120 in zumindest ungefähr gleichen Maßen abnehmen. Es können mehrere Verwendungsfähigkeiten vorbestimmt sein, denen jeweils ein Satz Schwellenwerte zugeordnet werden kann.

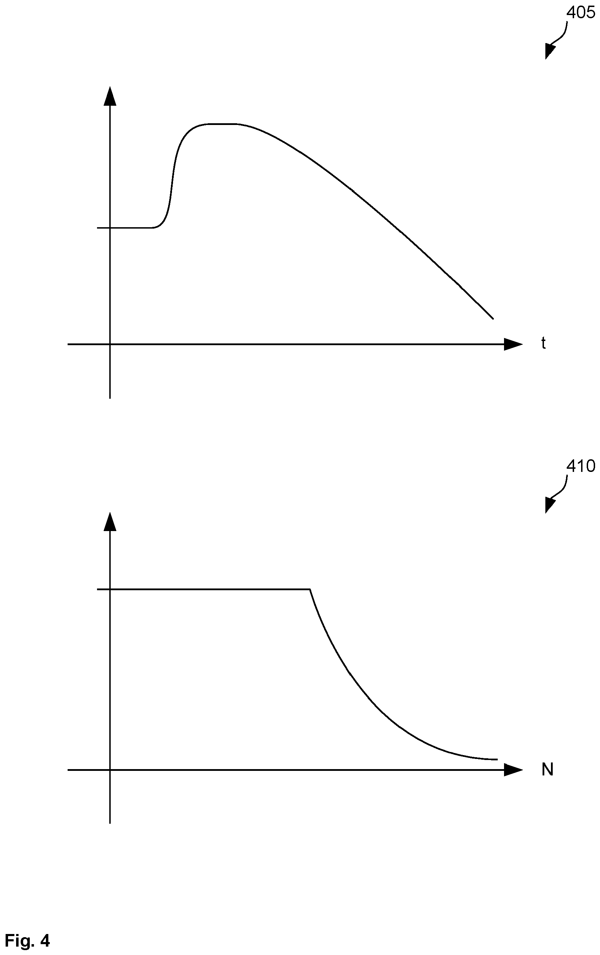

Figur 4 zeigt beispielhafte Verläufe von Belastungen einer fiktiven Komponente 115, 120 eines Hausgeräts 105.

Ein erster Verlauf 405 betrifft eine zeitliche Belastung der Komponente 115, 120. In horizontaler Richtung ist eine Zeit und in vertikaler Richtung eine verbleibende Belastungsfähigkeit angetragen. Die Zeit kann als Betriebszeit angesetzt sein. Zu Beginn des Verlaufs 405 ist die verbleibende Belastungsfähigkeit der Komponente 115, 120 mittelgroß. Ihre Verwendung hat also eine mittelgroße schädigende oder verschleißende Wirkung auf die Komponente 115, 120. Nach einiger Zeit steigt die Belastung an und nähert sich nach beispielsweise ca. 400 Stunden einem Maximum. Dieser Effekt ist beispielsweise von elektronischen Schaltungen bekannt, die nach ihrer Herstellung zunächst ein erhöhtes Ausfallrisiko zeigen und danach sehr zuverlässig arbeiten. Später kann die Belastungsfähigkeit der Komponente 115, 120 ungefähr linear in Richtung null abfallen. Anders ausgedrückt kann ihr Betrieb eine Komponente 115, 120 diese um so stärker schädigen oder sie verschleißen lassen, je älter die Komponente 115, 120 bereits ist.

Ein zweiter Verlauf 410 betrifft eine Belastung einer Komponente 115, 120 durch Betätigung. In horizontaler Richtung ist die Gesamtzahl der erfolgten Betätigungen und in vertikaler Richtung eine verbleibende Belastungsfähigkeit der Komponente 115, 120 dargestellt. Die betrachtete Komponente 115, 120 kann beispielsweise einen Taster oder Schalter umfassen. Bis zu einem vorbestimmten Wert können die Betätigungen die Komponente 115, 120 praktisch nicht belasten. Ist dieser Wert erreicht, kann die verbleibende Belastungsfähigkeit in Abhängigkeit der Belastung - also der Betätigung - auf eine vorbestimmte Weise abfallen. Vorliegend ist der Abfall ein im Wesentlichen exponentiell nach Art einer Zerfallsfunktion.

Es kann auch berücksichtigt werden, in welcher Weise die Komponente 115, 120 betätigt wird. Sollte die Komponente 115, 120 beispielsweise nicht verteilt über die Zeit, sondern konzentriert in einem kurzen Zeitbereich sehr häufig betätigt werden, so kann der zweite Verlauf 410 beispielsweise in horizontaler Richtung gestaucht werden, sodass der oben erwähnte Wert weiter links liegt.

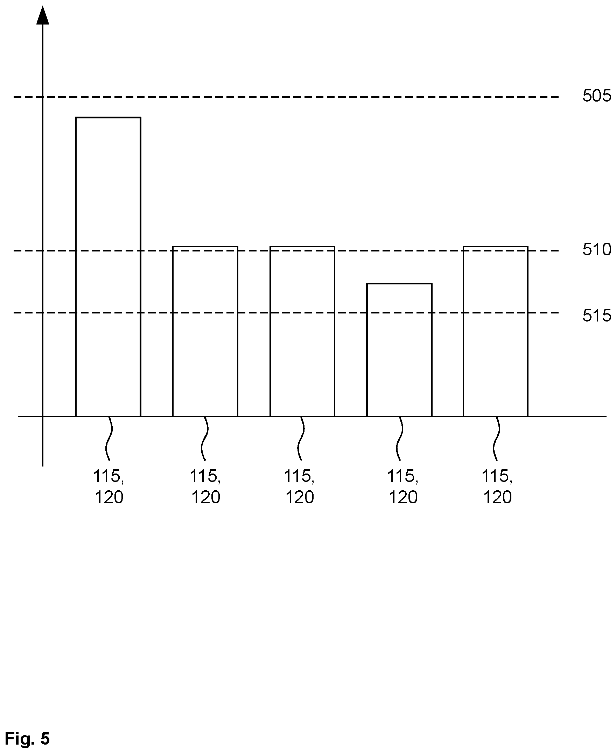

Figur 5 zeigt beispielhafte vorbestimmte verbleibende Verwendungsfähigkeiten für ein Hausgerät 105 in Abhängigkeit von bestimmten Belastungsfähigkeiten umfasster Komponenten 115, 120. Vorliegend wird beispielhaft von fünf relevanten Komponenten 115, 120 ausgegangen, die bewertet werden sollen. In vertikaler Richtung ist eine Verwendungsfähigkeit des Hausgeräts 105 angedeutet. Beispielhaft sind drei Verwendungsfähigkeiten vorbestimmt, die das Hausgerät 105 erreichen kann. Jede der vorbestimmten Verwendungsfähigkeiten ist durch einen Schwellenwert in Form einer unterbrochenen horizontalen Linie dargestellt. Einer ersten vorbestimmten Verwendungsfähigkeit ("Gold") ist ein oberer Schwellenwert 505, einer zweiten vorbestimmten Verwendungsfähigkeit ("Silber") ist ein mittlerer Schwellenwert 510 und einer dritten vorbestimmten Verwendungsfähigkeit ("Bronze") ein unterer Schwellenwert 515 zugeordnet. Es ist zu beachten, dass in anderen Ausführungsformen auch andere Schwellenwerte 505-515 oder andere Verwendungsfähigkeiten angesetzt werden können und dass jeweils beliebig viele davon verwendet werden können.

Die Komponenten 115, 120 des dargestelltes Hausgeräts 105 erreichen mit einer Ausnahme den mittleren Schwellenwert 510. Da jedoch der höchste Schwellenwert 505-515, den alle Komponenten 115, 120 überschreiten, der untere Schwellenwert 520 ist, wird insgesamt nur die Verwendungsfähigkeit "Bronze" erreicht. Auch der Umstand, dass eine der Komponenten 115, 120 den mittleren Schwellenwert 510 weit überschreitet und beinahe den oberen Schwellenwert 505 erreicht, ändert daran nichts.

Es ist zu beachten, dass im dargestellten Beispiel die Schwellenwerte 505-515 für die einzelnen Komponenten 115, 120 durch passende Belastungsfunktionen einander angeglichen wurden. In einer weiteren Ausführungsform kann zum Erreichen einer niedrigeren Verwendungsfähigkeit eine Komponente 115, 120 nicht betrachtet werden, die zum Erreichen einer höheren Verwendungsfähigkeit erforderlich ist.

### Bezugszeichen

- 100: System
- 105: Hausgerät
- 110: externe Stelle
- 115: erste Komponente
- 120: zweite Komponente
- 125: Steuervorrichtung
- 130: Verarbeitungseinrichtung
- 135: Kommunikationseinrichtung
- 140: Ausgabeeinrichtung
- 145: Kommunikationseinrichtung
- 150: Verarbeitungseinrichtung
- 155: Speichervorrichtung
- 160: Eingabeeinrichtung

- 200: erstes Verfahren
- 205: Bestimmen Betriebsinformation eines Hausgeräts
- 210: Bestimmen Belastung einer Komponente
- 215: Bestimmen Historie der Komponente
- 220: Bestimmen verbleibende Belastungsfähigkeit der Komponente
- 225: Bestimmen Verwendungsfähigkeit des Hausgeräts
- 230: Bereitstellen Verwendungsfähigkeit

- 300: zweites Verfahren
- 305: Empfangen Betriebsinformation eines Hausgeräts
- 310: Bestimmen Belastung einer Komponente
- 315: Bestimmen Bewertung und Belastung einer Komponente
- 320: Bestimmen Belastungsfunktion der Komponente
- 325: Bestimmen Schwellenwert für verbleibende Belastungsfähigkeit der Komponente
- 405: erster Verlauf
- 410: zweiter Verlauf

- 505: oberer Schwellenwert
- 510: mittlerer Schwellenwert
- 515: unterer Schwellenwert

## Patentansprüche

1. Computerimplementiertes Verfahren (200) zum Bestimmen einer Verwendungsfähigkeit eines Hausgeräts (105) (105), wobei das Verfahren folgende Schritte umfasst:
- Abtasten (205) von Betriebsinformationen des Hausgeräts (105);
- Bestimmen (210) von Belastungen verschiedener Komponenten (115, 120) des Hausgeräts (105) auf der Basis der Betriebsinformationen;
- Bestimmen von verbleibenden Belastungsfähigkeiten der verschiedenen Komponenten (115, 120) des Hausgeräts (105) auf der Basis der bestimmten Belastungen mittels vorbestimmten, zugeordneten Belastungsfunktionen,
- wobei eine Belastungsfunktion eine bestimmte Belastung einer Komponente (115, 120) auf deren verbleibende Belastungsfähigkeit abbildet;
**gekennzeichnet durch** die Schritte:
- Bestimmen von jeweils einem Schwellenwert für jede der bestimmten verbleibenden Belastungsfähigkeiten der verschiedenen Komponenten, wobei die Schwellenwerte einer vorbestimmten Verwendungsfähigkeit des Hausgeräts (105) zugeordnet sind;
- Bestimmen (225) der Verwendungsfähigkeit des Hausgeräts (105), wobei bestimmt wird, dass das Hausgerät (105) die vorbestimmte Verwendungsfähigkeit des Hausgeräts (105) erfüllt, falls die Belastungsfähigkeiten aller besagten Komponenten (115, 120) den jeweiligen besagten Schwellenwert übersteigen;
- Verleihen eines Qualitätssiegels an das Hausgerät, wenn das Hausgerät (105) die vorbestimmte Verwendungsfähigkeit erfüllt.

2. Verfahren (200) nach Anspruch 1, wobei die Verwendungsfähigkeit einen Wert auf einer vorbestimmten eindimensionalen Skala umfasst.

3. Verfahren (200) nach Anspruch 2, wobei mehrere Verwendungsfähigkeiten des Hausgeräts (105) vorbestimmt sind; wobei für die vorbestimmten Verwendungsfähigkeiten jeweils Schwellenwerte für die Belastungsfähigkeiten der Komponenten (115, 120) des Hausgeräts (105) vorbestimmt sind.

4. Verfahren (200) nach Anspruch 3, wobei eine Komponente (115, 120) bestimmt wird, deren bestimmte Belastung die Erfüllung einer höheren Verwendungsfähigkeit durch das Hausgerät (105) verhindert.

5. Verfahren nach einem der vorangehenden Ansprüche, wobei die Belastung einer Komponente (115, 120) eine zeitliche Verteilung von Benutzungen berücksichtigt.

6. Verfahren (200) nach einem der vorangehenden Ansprüche, wobei die Belastung einer Komponente (115, 120) unter Berücksichtigung einer durchgeführten Pflege- oder Servicemaßnahme bestimmt wird.

7. Verfahren (200) nach einem der vorangehenden Ansprüche, wobei die Belastungsfunktion einer im Hausgerät (105) verbauten Komponente (115, 120) zugeordnet ist.

8. Verfahren (200) nach einem der vorangehenden Ansprüche, wobei ein Schwellenwert für eine Komponente (115, 120) auf der Basis gesammelter Informationen über Belastungen und Ausfälle einer vergleichbaren Komponente (115, 120) in einer Vielzahl vergleichbarer Hausgeräte (105) bestimmt wird.

9. Verfahren nach einem der vorangehenden Ansprüche, wobei eine Belastungsfunktion für eine Komponente (115, 120) auf der Basis gesammelter Informationen über Belastungen und Ausfälle einer vergleichbaren Komponente (115, 120) in einer Vielzahl vergleichbarer Hausgeräte (105) bestimmt wird.

10. Verfahren (200) nach einem der vorangehenden Ansprüche, wobei die bestimmte Verwendungsfähigkeit am Hausgerät (105) bereitgestellt wird.

11. Verfahren (200) nach einem der vorangehenden Ansprüche, wobei ein vorbestimmtes Garantieversprechen für das Hausgerät gegeben wird, wenn das Hausgerät (105) die vorbestimmte Verwendungsfähigkeit erfüllt.

12. Verfahren (200) nach Anspruch 11, wobei das Hausgerät (105) als zertifiziertes Gebrauchtgerät einer weiteren Benutzung zugeführt wird.

## Claims

1. Computer implemented method (200) for determining a utilisation capability of a household appliance (105), wherein the method comprises the following steps:
- sampling (205) operating information of the household appliance (105);
- determining (210) loads of various components (115, 120) of the household appliance (105) on the basis of the operating information;
- determining remaining load capabilities of the various components (115, 120) of the household appliance (105) on the basis of the determined loads by means of predetermined allocated load functions, wherein a load function maps a determined load of a component (115, 120) to its remaining load capability;
**characterised by** the steps:
- determining in each case a threshold value for each of the determined remaining load capabilities of the various components, wherein the threshold values are allocated to a predetermined utilisation capability of the household appliance (105);
- determining (225) the utilisation capability of the household appliance (105), wherein it is determined that the household appliance (105) meets the predetermined utilisation capability of the household appliance (105) in the event of the load capabilities of all the aforementioned components (115, 120) exceeding the respective aforementioned threshold value;
- awarding a quality certification to the household appliance if the household appliance (105) meets the predetermined utilisation capability.

2. Method (200) according to claim 1, wherein the utilisation capability comprises a value on a predetermined one-dimensional scale.

3. Method (200) according to claim 2, wherein multiple utilisation capabilities of the household appliance (105) are predetermined; wherein for the predetermined utilisation capabilities in each case threshold values are predetermined for the load capabilities of the components (115, 120) of the household appliance (105).

4. Method (200) according to claim 3, wherein a component (115, 120) is determined whose determined load prevents the household appliance (105) from meeting a greater utilisation capability.

5. Method according to one of the preceding claims, wherein the load of a component (115, 120) takes into account a temporal distribution of uses.

6. Method (200) according to one of the preceding claims, wherein the load of a component (115, 120) is determined taking into account a maintenance or service measure that is performed.

7. Method (200) according to one of the preceding claims, wherein the load function is allocated to a component (115, 120) that is installed in the household appliance (105).

8. Method (200) according to one of the preceding claims, wherein a threshold value for a component (115, 120) is determined on the basis of collected information regarding loads and failures of a comparable component (115, 120) in a plurality of comparable household appliances (105).

9. Method according to one of the preceding claims, wherein a load function for a component (115, 120) is determined on the basis of collected information regarding loads and failures of a comparable component (115, 120) in a plurality of comparable household appliances (105).

10. Method (200) according to one of the preceding claims, wherein the determined utilisation capability is provided to the household appliance (105).

11. Method (200) according to one of the preceding claims, wherein a predetermined guarantee commitment is provided for the household appliance if the household appliance (105) meets the predetermined utilisation capability.

12. Method (200) according to claim 11, wherein the household appliance (105) is supplied as a certified used appliance of a further use.

## Revendications

1. Procédé mis en oeuvre par ordinateur (200) pour déterminer une capacité d'utilisation d'un appareil ménager (105),
dans lequel le procédé comprend les étapes suivantes :
- analyse (205) des informations de fonctionnement de l'appareil ménager (105),
- détermination (210) des sollicitations de différents composants (115, 120) de l'appareil ménager (105) sur la base des informations de fonctionnement,
- détermination de capacités de sollicitation restantes des différents composants (115, 120) de l'appareil ménager (105) sur la base des sollicitations déterminées au moyen de fonctions de sollicitation associées prédéterminées,
dans lequel une fonction de sollicitation représente une sollicitation déterminée d'un composant (115, 120) quant à sa capacité de sollicitation restante,
**caractérisé par** les étapes suivantes :
- détermination respectivement d'une valeur de seuil pour chacune des capacités de sollicitation restantes déterminées des différents composants, dans lequel les valeurs de seuil sont associées à une capacité d'utilisation prédéterminée de l'appareil ménager (105),
- détermination (225) de la capacité d'utilisation de l'appareil ménager (105), où il est déterminé que l'appareil ménager (105) satisfait à la capacité d'utilisation prédéterminée de l'appareil ménager (105) dans le cas où les capacités de sollicitation de tous lesdits composants (115, 120) dépassent ladite valeur de seuil respective,
- l'octroi d'un label de qualité à l'appareil ménager, lorsque l'appareil ménager (105) satisfait à la capacité d'utilisation prédéterminée.

2. Procédé (200) selon la revendication 1, dans lequel la capacité d'utilisation comprend une valeur sur une échelle unidimensionnelle prédéterminée.

3. Procédé (200) selon la revendication 2, dans lequel plusieurs capacités d'utilisation de l'appareil ménager (105) sont prédéterminées, dans lequel, pour les capacités d'utilisation prédéterminées, des valeurs de seuil respectives sont prédéterminées pour les capacités de sollicitation des composants (115, 120) de l'appareil ménager (105).

4. Procédé (200) selon la revendication 3, dans lequel un composant (115, 120) est déterminé, dont la sollicitation déterminée empêche de satisfaire à une capacité d'utilisation supérieure par l'appareil ménager (105).

5. Procédé selon l'une des revendications précédentes, dans lequel la sollicitation d'un composant (115, 120) prend en compte une répartition dans le temps des utilisations.

6. Procédé (200) selon l'une des revendications précédentes, dans lequel la sollicitation d'un composant (115, 120) est déterminée en tenant compte d'une action d'entretien ou de maintenance exécutée.

7. Procédé (200) selon l'une des revendications précédentes, dans lequel la fonction de sollicitation est associée à un composant (115, 120) intégré dans l'appareil ménager (105).

8. Procédé (200) selon l'une des revendications précédentes, dans lequel une valeur de seuil pour un composant (115, 120) est déterminée sur la base d'informations collectées sur des sollicitations et des défaillances d'un composant similaire (115, 120) dans une pluralité d'appareils ménagers (105) similaires.

9. Procédé selon l'une des revendications précédentes, dans lequel une fonction de sollicitation pour un composant (115, 120) est déterminée sur la base d'informations collectées sur des sollicitations et des défaillances d'un composant similaire (115, 120) dans une pluralité d'appareils ménagers (105) similaires.

10. Procédé (200) selon l'une des revendications précédentes, dans lequel la capacité d'utilisation déterminée est fournie sur l'appareil ménager (105).

11. Procédé (200) selon l'une des revendications précédentes, dans lequel un engagement de garantie prédéterminé est délivré pour l'appareil lorsque l'appareil ménager (105) satisfait à la capacité d'utilisation prédéterminée.

12. Procédé (200) selon la revendication 11, dans lequel l'appareil ménager (105) est fourni pour une utilisation future sous forme d'appareil d'occasion certifié.
